# EUROPEAN PATENT SPECIFICATION

(11) **EP 3 713 408 B1**
(45) Date of publication and mention of the grant of the patent: **01.11.2023**
(21) Application number: 18815819.0
(22) Date of filing: 15.11.2018
(51) Int. Cl.: A01K 97/02

(54) **BAIT DISPENSING DEVICE**
KÖDERAUSGABEVORRICHTUNG
DISPOSITIF DE DISTRIBUTION D'APPÂT

(30) Priority: 20.11.2017 IT 201700132165
(43) Date of publication of application: 30.09.2020
(73) Proprietor: FG Devab S.r.l, 40064 Ozzano dell'Emilia (BO) (IT)
(72) Inventor: CANDINI, Stefano, 40043 MarzaBotto (BO) (IT)
(74) Representative: Mari, Marco Giovanni
(86) International application number: PCT/IT2018/050221
(87) International publication number: WO 2019/097558

(56) References cited:
- WO-A1-2009/098507
- WO-A1-2015/087361
- JP-A- S5 791 143

## Description

### Field of application

The invention relates to a bait dispensing device, for use in sport fishing with a rod, particularly carp fishing.

### State of the art

According to the angling technique of carp fishing, the bait should not be applied to the hook, but rather should be distributed directly in the water in the form of groundbait.

For this purpose, over the years several specific bait dispensing devices have been designed, in technical jargon called feeders, or devices for containing groundbait, to be cast into the water.

Feeders are therefore devices used to temporarily contain the groundbait and release it in the water, at the right moment, to attract both bottom-feeding and surface-feeding fish.

For carp-fishing it is extremely important that the feeder holds the groundbait inside it when the line is cast and opens only once it reaches the water, thereby allowing the groundbait to scatter over a limited, specific area of the water, before starting to fish.

Patent application No. CR2014A0000004 by the same author describes a feeder comprising a container, adapted to house within it the groundbait during the cast, where said container, with a tapered shape featuring a pointed head portion and tail portion, is sub-divided into two half-shells connected to one another by filiform means, and comprises reversible closing means for said half-shells, using the force of attraction of an active magnetic field between them.

These half-shells are therefore adapted to remain coupled when the feeder is cast, and to separate fully from one another only after reaching the water to be baited, while sinking, making use of the resistance offered by the water against the two half-shells.

This container also comprises means of fastening it to a line.

The feeder described in the afore-mentioned patent application still has several limits and disadvantages.

The first disadvantage occurs when filling the feeder, especially when dry groundbait is being used.

Dry groundbait generally takes the form of small balls that do not stick to one another and which therefore need to be placed inside the container with the greatest care, taking up only one of the half-shells held in a perfectly horizontal position. The second half-shell acts only as a cover, but cannot contain any groundbait.

The feeder therefore works only half-full, with evident disadvantages for the angler who distributes less groundbait with each cast, and for the fishing expedition, which is thereby slowed.

On the other hand, in the case where the groundbait is damp, in the form of a sticky fluid, disadvantages occur when opening and releasing the groundbait into the water: the concave shape of the half-shells tends to hold the groundbait back, without letting it slide into the water.

A traditional feeder opens only if the impact with the water takes place with the joint plane of the two half-shells orthogonal to the water surface, otherwise the feeder might not open and would need to be retrieved and cast out again.

The tapered, substantially "torpedo-like" shape of traditional feeders, also makes casting problematic: at the start of the cast, the feeder cannot remain in a vertical position and therefore rests on the ground in a horizontal position, and is pulled during the first part of the cast. The feeder scraping against the ground causes friction and a loss of energy which can affect the distance of the cast. Even more disadvantageously, gravelly terrain can damage the feeder, while grassy terrain can cause the line to become tangled in the blades of grass.

Although aerodynamic, the tapered shape generates turbulence effects along the feeder body which come together at the tail where they cause phenomena of slowing and heeling.

The sub-division of the container into two half-shells is also disadvantageous when retrieving the feeder: when reeling in the line to retrieve the feeder, the two half-shells remain separated, with different floating planes, swaying and bouncing uncontrollably and independently from one another on the surface of the water, resulting in great difficulty for the angler. The contact surface of the two half-shells on the water surface is very small, there is a risk that the line will tangle at the junction of the filiform elements connecting the two half-shells and that water will be taken on.

Patent applications No. WO 2015/087361 A1 and WO 2009/098507 A1 disclose each a bait dispensing device according to the preamble of claim 1.

### Presentation of the invention

The object of the invention is to create a bait dispensing device which is easy to fill and easy to use, both when casting and retrieving.

These objects are achieved with a bait dispensing device for use in sport fishing as defined in claim 1, adapted to be cast with a line and to open by interacting with water, to allow dispensing of groundbait, comprising:
- a container sub-divided into a plurality of sectors, adapted to house within it said groundbait during the cast and to open by interacting with the water,
- means of fastening said container to said line;
- reversible closing means for said container, using a force of attraction of an active magnetic field between said sectors along their joint planes;
characterized in that:
- said container is sub-divided into at least four sectors shaped as "segments", adapted to separate fully from one another as a result of interaction with the water;
- said means of fastening said container to said line comprise at least four flexible filiform elements, of the same length, each having two ends, where each first end is associated with one of said sectors, and each second end is associated with the second ends of the other filiform elements, and together can be associated with said line;
- said bait dispensing device further comprises movement limiting means for said sectors when said bait dispensing device is in the open configuration, where said movement limiting means comprise:
   - an elongated core around which said flexible filiform elements are arranged;
   - a truncated cone-shape wedge that can slide along said core; and
   - a compression-operated helical spring fitted onto said core;
where said wedge, in the bait dispensing device open configuration, is free to slide along said core towards the outside of said container, due to the effect of the release action of said helical spring, acting as a movement limiter for said sectors.

Advantageously, said bait dispensing device comprises sectors in multiples of two, beginning with six.

According to a first aspect of the invention, the shape of said container reproduces a solid of rotation.

Advantageously, said container comprises a substantially flat head portion and a substantially pointed tail portion, where said means of fastening said container to said line are arranged at said tail portion.

In a preferred embodiment, said at least four flexible filiform elements are made of a plastic material, so that said bait dispensing device remains in the open configuration during retrieval thanks to the memory effect deriving from the nature of the filiform elements.

Furthermore, said means of fastening said container to said line comprise an annular ferrule adapted to hold simultaneously within it the second ends of said flexible filiform elements.

In a preferred embodiment, said ferrule is internally hollow and comprises a jacket and a bottom water-tightly associated with one another, so as to isolate a volume of air inside said ferrule.

According to a possible embodiment, said magnetic field is generated by a plurality of magnets provided along the edges of said sectors in proximity of their ends.

The bait dispensing device according to the invention presents several advantages.

Thanks to the sub-division of the container into at least four sectors, when filling with groundbait there is a greater containment volume: it is in fact sufficient to open only one sector to allow the insertion of groundbait which can occupy over ¾ of the total available volume of the feeder; the three sectors that remain closed act as sides. The result is better and faster bait dispensation, less fatigue for the angler and more productive angling.

Furthermore, by dividing the surface of the container into four parts, each sector has reduced concavity, much less than the concavity of the two traditional half-shells. The reduced concavity facilitates the release of groundbait into the water.

Thanks to the flat head portion, when casting, in addition to the traditional positions (suspended or resting horizontally on the ground) the feeder can advantageously start from the ground in a vertical position, leaving the ground orthogonally, with no losses of energy caused by friction or by its weight. All the energy is transmitted by the angler to the line and subsequently to the feeder, which can thus reach greater distances.

While maintaining good aerodynamic properties due to the tapered shape of the feeder, the absence of the pointed head end offers greater stability when casting the feeder, which maintains a linear direction without the risk of heeling due to gusts of wind. Furthermore, air turbulence at the tail, resulting in increased friction and loss of speed, is avoided.

Thanks to the at least four sectors, even retrieval of the empty feeder is easier: the reduced concavity of the sectors results in a larger area in contact with the water surface when retrieving the empty feeder. In use, the two lower sectors float and slide, with an effect very similar to water skis, while the two upper sectors lend stability to the feeder, which no longer risks getting in a twist and tangling the line. This helps the angler who, with little effort, by reeling in the line, can retrieve the bait dispensing device, controlling its trajectory and preventing the feeder from repeatedly striking the water, rocks or stones.

Advantageously, said movement limiting means keep the sectors apart when the now-open device is retrieved by the angler, without running the risk, in particular, unusual water conditions, that the feeder might close, enclosing water inside it.

In general, the bait dispensing device according to the invention is highly effective in terms of casting range, extremely simple to retrieve, easy to use and fill, durable and not subject to wear and malfunctions, precise, light and economical.

### Brief description of the drawings

Further characteristics and advantages of the invention will become more apparent from the following more detailed description thereof, illustrated by way of non-limiting example in the accompanying drawings, showing several preferred embodiments, wherein:
Figures 1-4 show an axonometric view of a bait dispensing device according to the invention, in the filling phase, in the closed configuration for casting, and in two open phases;
Figure 5 shows a longitudinal cross-section along an axial plane of the bait dispensing device according to the invention, in a closed configuration;
Figure 6 shows a partially exploded axonometric view of the bait dispensing device according to the invention, in an open configuration.

### Detailed description of a preferred embodiment of the invention

With reference to the Figures, a bait dispensing device 1 is shown, commonly called a feeder, for use in sport fishing, adapted to house within it a certain quantity of groundbait, to be cast with a line 2, and to open by interacting with the water, to enable the release of said groundbait directly into the water.

Said device 1 essentially comprises:
- a container 3, adapted to house within it said groundbait during the cast of a line 2 from a fishing rod (non illustrated), sub-divided into four sectors 13, 23, 33, 43 shaped as "segments";
- means of fastening said container 3 to said line 2;
- reversible closing means for said container 3,

The number of sectors may also be greater, but must always be a multiple of two, beginning with four, i.e. an even number, to guarantee perfect symmetry of the container.

The container 3 is made entirely of a light, sturdy plastic material, with a low specific weight, below that of water, enabling it to float when being retrieved. In particular, the container 3 is made of polypropylene.

Said closing means enable the container 3 containing the groundbait to be securely closed, before then opening on interaction with the water and allowing the separation of the four sectors 13, 23, 33, 43 and the complete opening of the container.

The four sectors 13, 23, 33, 43 are adapted to separate fully from one another thanks to the ovalization of the container 3 with a radial deformation of each sector occurring on impact with the water and the subsequent sinking of the container.

Ovalization of the container 3 is ensured by the particularly thin thickness and the deformability of the plastic material the container 3 is made of.

In the variant shown, said reversible closing means use the force of attraction of a magnetic field, produced by natural permanent rare earth magnets 10 placed facing one another with opposing poles. Alternatively, electro-magnets may be used, or pairs formed of a magnet and an element made of ferromagnetic material.

Said magnets 10 are appropriately placed on said container 3, so as to generate an attractive force between the four sectors 13, 23, 33, 43 and thereby guarantee their complete closure, with the groundbait on the inside. In particular, the magnets 10 are active on the joint planes of the sectors.

The intensity, position and number of magnets 10 can in any case be suitably chosen based on the size of the container 3, the weight of the container once it is filled with groundbait, and the distance one wishes to reach with the device 1.

The shape of said container 3 reproduces a solid of rotation.

Said container 3 has a partially tapered shape, with a flat head portion 3' and a pointed tail portion 3".

Said means of fastening said container 3 to said line 2 comprise four flexible filiform elements 14, 24, 34, 44, each having a first end 14', 24', 34', 44' and a second end 14", 24", 34", 44".

Each first end 14', 24', 34', 44' is associated respectively to one of said sectors 13, 23, 33, 43, at the pointed tail portion 3" of the container:
The second ends 14", 24", 34", 44" of the filiform elements 14, 24, 34, 44 are on the other hand held united with one another, so as to be simultaneously associated with said line 2.

Said filiform elements 14, 24, 34, 44 have the same length, to ensure that the force transmitted by the line 2 to the container 3 is equally divided between the four sectors 13, 23, 33, 43 and that no differential forces are created that could cause the container 3 to open during the cast.

It is extremely important that said flexible filiform elements 14, 24, 34, 44, allow the four sectors 13, 23, 33, 43 to move in space thru 360°.

In the variant shown, said four flexible filiform elements 14, 24, 34, 44 are made of plastic material so that said bait dispensing device 1 remains in the open configuration, even when retrieving the feeder, thanks to the memory effect deriving from the nature of the filiform elements.

Said means of fastening said container 3 to said line 2 comprise an annular ferrule 5, adapted to hold simultaneously within it the second ends 14", 24", 34", 44" of said flexible filiform elements 14, 24, 34, 44.

Said annular ferrule 5 is fitted by interference onto said flexible filiform elements 14, 24, 34, 44.

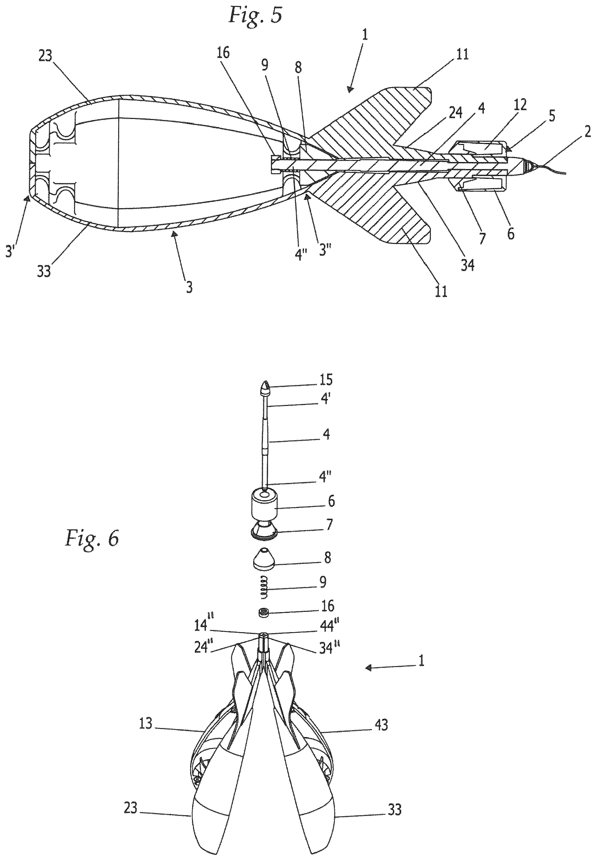

With particular reference to the cross-section shown in Figure 5 and the exploded drawing shown in Figure 6, said ferrule 5 is internally hollow and comprises an outer jacket 6 and a closing bottom element 7.

Said outer jacket 6 and said closing bottom element 7 are associated with one another by means of a water-tight fitting, so as to isolate a volume of air 12.

Said volume of air 12 helps the empty feeder 1 to float when being retrieved: the specific weight of the volume of air 12 enclosed in the ferrule 5 balances the sum of the specific weights of the magnets 10 and of the entire polypropylene container 3, making the overall specific weight of the feeder 1 lower than the specific weight of water.

Said bait dispensing device 1 also comprises movement limiting means for said sectors 13, 23, 33, 43, useful when said bait dispensing device 1 is in the open configuration and needs to be retrieved by the angler in anomalous, particularly turbulent water conditions.

During retrieval, to prevent the sectors 13, 23, 33, 43 getting too close to one another beyond the limit at which the force of attraction of the magnetic field can come into effect, said movement limiting means substantially comprise a truncated cone-shape wedge 8 that cooperates with said flexible filiform elements 14, 24, 34, 44 by interposing between them.

In addition to said wedge 8, as can be seen in the Figures, said movement limiting means also comprise:
- an elongated core 4 around which said flexible filiform elements 14, 24, 34, 44 are arranged, having a first end 4' and a second end 4";
- a compression-operated helical spring 9 fitted onto said core 4;

Said wedge 8 can slide along said core 4.

Said flexible filiform elements 14, 24, 34, 44 are held around said core 4 by means of said ferrule 5.

The first end 4' of said core 4 is provided with a hole 15 for fastening the line 2.

The second end 4" of said core 4 is provided with a collar 16 adapted to act as a stop element for said spring 9 which acts in thrust against said collar 16 and said wedge 8.

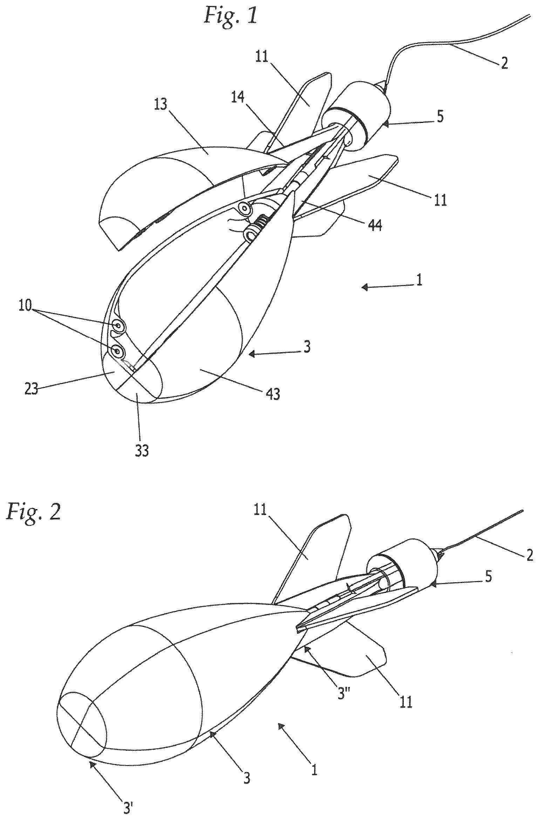

The side surface 8' of said wedge 8 is complementary to the concavity of the tail portions of said sectors 13, 23, 33, 43, so that, with the feeder 1 in the closed configuration and manually armed by the angler (see Figures 1 and 5), said wedge 8 is housed in the tail portion 3" of the container 3.

In this configuration the spring 9 is compressed and held between the wedge 8 and the collar 16 at the end of said core 4.

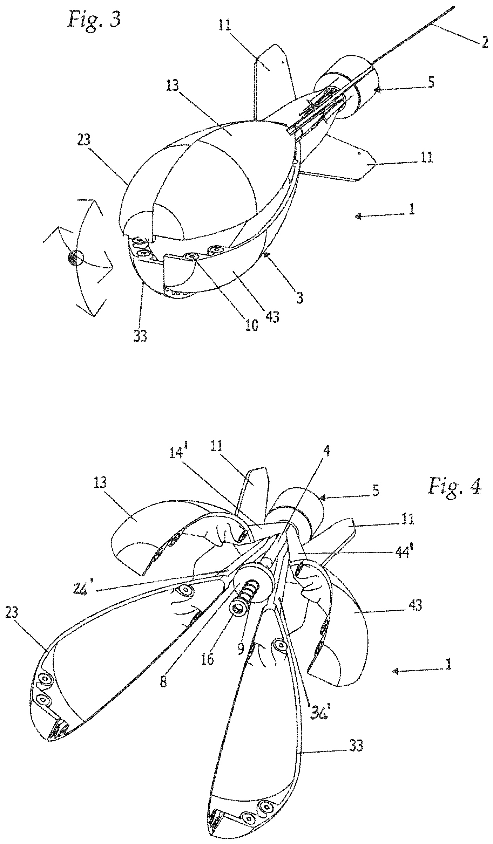

Upon contact with the water, the feeder 1 deforms and opens (see Figure 4), the sectors 13, 23, 33, 43, and the flexible filiform elements 14, 24, 34, 44, move away from one another and free said wedge 8 which can slide along the core 4 towards its first end 4', due to the release of the previously compressed spring 9. Once the wedge 8 has been freed, it remains in a position of possible interference with the flexible filiform elements 14, 24, 34, 44 acting as a movement limiter for each sector 13, 23, 33, 43 during feeder retrieval.

On the outer surface of the container 3, near the tail portion 3", there are positioned four stabilizer fins 11, equidistant from one another, whose function is to prevent the axial rotation of the container 3 during casting.

Use of the invention is described below.

Once the container 3 is fastened to the line 2, the bait dispensing device 1 is ready to be used.

First of all, the angler fills the container 3 with groundbait.

In the case of wet-sticky groundbait, the four sectors 13, 23, 33, 43 can be kept paired two by two, so as to create two half-shells that can be immersed into the bucket of groundbait and filled completely, and then closed against one another.

In the case of dry groundbait, the container 3 may be temporarily opened only at one sector 13, so that it can be filled with groundbait, with the help of a spoon, to more than ¾ of the available volume (Figure 1).

The angler, having identified the point where he wishes to distribute the groundbait, then casts the feeder 1 with the line 2, while the force of the magnetic field keeps the container 3 firmly closed (Figure 2).

Upon reaching the water, the container 3 opens.

The varied nature, intensity and direction of application of the resistance force exerted by the contact with the water with respect to that caused by friction with the air acts on the feeder 1 and overcomes the force of attraction of the magnetic field, thereby causing the ovalization of the feeder 1 and the separation - due to deformation - of the four sectors 13, 23, 33, 43 (Fig. 3). In particular, the final "octopus-like" or "spider-like" opening is achieved by twin simultaneous sliding of the sectors along two planes orthogonal to one another.

The entry of water into the container 3 increases the resistant force opposing the magnetic force and fully separates the four sectors 13, 23, 33, 43 which, moving away from one another, allow the complete release of the groundbait (Fig. 4).

The groundbait is quickly dispersed in the water, below the surface, while the four sectors 13, 23, 33, 43 remain individually associated with the line 2.

The now-empty feeder 1 returns to the surface in an open position, first of all due to the memory effect deriving from the nature of the flexible filiform elements, and secondly due to the presence of said movement limiting means.

The angler, easily reeling in the line 2, retrieves the empty container 3, thanks to the sliding over the water of two of the four sectors into which the feeder is divided.

## Claims

1. Bait dispensing device (1) for use in sport fishing, adapted to be cast with a line (2) and to open by interacting with water, to allow dispensing of bait, comprising:
- a container (3) sub-divided into a plurality of sectors and adapted to house within it said bait during the cast and to open by interacting with the water,
- means of fastening said container (3) to said line (2);
- reversible closing means for said container (3), using a force of attraction of an active magnetic field between said sectors along their joint planes;
**characterized in that**:
- said container (3) is sub-divided into at least four sectors (13, 23, 33, 43) shaped as "segments", adapted to separate fully from one another as a result of interaction with the water;
- said means of fastening said container (3) to said line (2) comprise at least four flexible filiform elements (14, 24, 34, 44) of the same length, each having two ends (14', 14", 24', 24" 34', 34" 44', 44"), where each first end (14', 24', 34', 44') is associated with one of said sectors, and each second end (14", 24", 34", 44") is associated with the second ends of the other filiform elements, and together can be associated with said line (2);
- said bait dispensing device (1) further comprises movement limiting means for said sectors (13, 23, 33, 43) when said bait dispensing device (1) is in the open configuration, where said movement limiting means comprise:
- an elongated core (4) around which said flexible filiform elements (14, 24, 34, 44) are arranged;
- a truncated cone-shape wedge (8) that can slide along said core (4); and
- a compression-operated helical spring (9) fitted onto said core (4);
where said wedge (8), in the bait dispensing device (1) open configuration, is free to slide along said core (4) towards the outside of said container (3), due to the effect of the release action of said helical spring (9), acting as a movement limiter for said sectors (13, 23, 33, 43).

2. Bait dispensing device (1) according to claim 1, **characterized in that** it comprises sectors in multiples of two, beginning with six.

3. Bait dispensing device (1) according to claim 1, **characterized in that** the shape of said container (3) reproduces a solid of rotation.

4. Bait dispensing device (1) according to claim 3, **characterized in that** said container comprises a substantially flat head portion (3') and a substantially pointed tail portion (3"), where said means of fastening said container (3) to said line (2) are arranged at said tail portion (3").

5. Bait dispensing device (1) according to claim 1, **characterized in that** said at least four flexible filiform elements (14, 24, 34, 44) are made of a plastic material, so that said bait dispensing device (1) remains in the open configuration during retrieval thanks to the memory effect deriving from the nature of the filiform elements.

6. Bait dispensing device (1) according to claim 1, **characterized in that** said means of fastening said container (3) to said line (2) comprise an annular ferrule (5) adapted to hold simultaneously within it the second ends (14", 24", 34",44") of said flexible filiform elements (14, 24, 34, 44).

7. Bait dispensing device (1) according to claim 6, **characterized in that** said annular ferrule (5) is internally hollow and comprises a jacket (6) and a bottom (7) water-tightly associated with one another, so as to isolate a volume of air inside said ferrule (5).

8. Bait dispensing device (1) according to claim 1, **characterized in that** said magnetic field is generated by a plurality of magnets (10) provided along the edges of said sectors (13, 23, 33, 43) in proximity of their ends.

## Patentansprüche

1. Köderausgabevorrichtung (1) zur Verwendung beim Sportfischen, die geeignet ist, mit einer Schnur (2) ausgeworfen zu werden und sich durch die Wechselwirkung mit Wasser zu öffnen, um die Ausgabe eines Köders zu ermöglichen, umfassend::
- einen Behälter (3), der in mehrere Sektoren unterteilt ist und geeignet ist, den besagten Köder während des Auswerfens in ihm unterzubringen und sich durch die Wechselwirkung mit dem Wasser zu öffnen,
- Mittel zur Befestigung des besagten Behälters (3) an der besagten Schnur (2);
- reversible Verschlussmittel für den besagten Behälter (3) unter Ausnutzung der Anziehungskraft eines aktiven Magnetfeldes zwischen den besagten Sektoren entlang ihrer Verbindungsebenen;
**dadurch gekennzeichnet, dass**:
- besagter Behälter (3) in mindestens vier Sektoren (13, 23, 33, 43) in Form von "Segmenten" unterteilt ist, geeignet, sich durch die Wechselwirkung mit dem Wasser vollständig zu trennen;
- besagte Mittel zur Befestigung des besagten Behälters (3) an die besagte Schnur (2) mindestens vier biegsame fadenförmige Elemente (14, 24, 34, 44) gleiche Länge umfassen, die jeweils zwei Enden (14', 14", 24', 24" 34', 34" 44', 44") aufweisen, wobei jedes erste Ende (14', 24', 34', 44') mit einem der besagten Sektoren verbunden ist und jedes zweite Ende (14", 24", 34", 44") mit den zweiten Enden der anderen fadenförmigen Elemente verbunden ist und zusammen mit der besagten Schnur (2) verbunden werden kann;
- besagte Köderausgabevorrichtung (1) ferner Bewegungsbegrenzungsmittel für die besagten Sektoren (13, 23, 33, 43) umfasst, wenn sich besagte Köderausgabevorrichtung (1) in der offenen Konfiguration befindet, wobei besagte Bewegungsbegrenzungsmittel Folgendes umfassen:
- einen länglichen Kern (4), um den die besagten flexiblen fadenförmigen Elemente (14, 24, 34, 44) angeordnet sind;
- einen kegelstumpfförmigen Keil (8), der entlang des besagten Kerns (4) gleiten kann; und
- eine auf den besagten Kern (4) aufgesetzte, auf Druck arbeitende Schraubenfeder (9);
wobei besagter Keil (8) in der offenen Konfiguration der Köderausgabevorrichtung (1) entlang des besagten Kerns (4) zur Außenseite des besagten Behälters (3) hin frei gleiten kann, und zwar aufgrund der Wirkung der Auslösetätigkeit der besagten Schraubenfeder (9), die als Bewegungsbegrenzer für die besagten Sektoren (13, 23, 33, 43) tätig ist.

2. Köderausgabevorrichtung (1) gemäß Anspruch 1, **dadurch gekennzeichnet, dass** sie Sektoren in einem Mehrfachen von zwei, beginnend mit sechs, umfasst.

3. Köderausgabevorrichtung (1) gemäß Anspruch 1, **dadurch gekennzeichnet, dass** die Form des besagten Behälters (3) einen Rotationskörper wiedergibt.

4. Köderausgabevorrichtung (1) gemäß Anspruch 3, **dadurch gekennzeichnet, dass** besagter Behälter einen im Wesentlichen flachen Kopfteil (3') und einen im Wesentlichen spitzen Endteil (3") umfasst, wobei besagte Mittel zur Befestigung des besagten Behälters (3) an besagter Schnur (2) an dem besagten Endteil (3") angeordnet sind.

5. Köderausgabevorrichtung (1) gemäß Anspruch 1, **dadurch gekennzeichnet, dass** die besagten mindestens vier biegsamen fadenförmigen Elemente (14, 24, 34, 44) aus einem Kunststoffmaterial hergestellt sind, so dass besagte Köderausgabevorrichtung (1) während der Wiedererlangung dank des von der Beschaffenheit der fadenförmigen Elemente herrührenden Memory-Effekts in der offenen Konfiguration bleibt.

6. Köderausgabevorrichtung (1) gemäß Anspruch 1, **dadurch gekennzeichnet, dass** besagte Mittel zur Befestigung des besagten Behälters (3) an der besagten Schnur (2) eine ringförmige Hülse (5) umfassen, die geeignet ist, die zweiten Enden (14", 24", 34", 44") der besagten flexiblen fadenförmigen Elemente (14, 24, 34, 44) gleichzeitig in sich zu halten.

7. Köderausgabevorrichtung (1) gemäß Anspruch 6, **dadurch gekennzeichnet, dass** besagte ringförmige Hülse (5) innen hohl ist und einen Mantel (6) und einen Boden (7) umfasst, die wasserdicht miteinander verbunden sind, so dass ein Luftvolumen im Inneren der besagten Hülse (5) isoliert wird.

8. Köderausgabevorrichtung (1) gemäß Anspruch 1, **dadurch gekennzeichnet, dass** besagtes Magnetfeld durch eine Vielzahl von Magneten (10) erzeugt wird, die entlang der Kanten der besagten Sektoren (13, 23, 33, 43) in der Nähe ihrer Enden vorgesehen sind.

## Revendications

1. Dispositif de distribution d'appâts (1) à utiliser pour la pêche sportive, adapté pour être lancé avec une ligne (2) et pour s'ouvrir en interagissant avec l'eau, afin de permettre la distribution d'appâts, comprenant :
- un récipient (3) subdivisé en une multitude de secteurs et adapté pour contenir à l'intérieur ledit appât pendant le lancer et pour s'ouvrir en interagissant avec l'eau,
- des moyens de fixation dudit récipient (3) à ladite ligne (2) ;
- des moyens de fermeture réversible dudit récipient (3), utilisant une force d'attraction d'un champ magnétique actif entre lesdits secteurs le long de leurs plans de jonction ;
**caractérisé par le fait que** :
- ledit conteneur (3) est subdivisé en au moins quatre secteurs (13, 23, 33, 43) en forme de « segments », aptes à se séparer complètement les uns des autres à la suite de l'interaction avec l'eau ;
- lesdits moyens de fixation dudit récipient (3) à ladite ligne (2) comprennent au moins quatre éléments filiformes flexibles (14, 24, 34, 44) de même longueur, ayant chacun deux extrémités (14', 14", 24', 24" 34', 34" 44', 44"), où chaque première extrémité (14', 24', 34', 44') est associée à l'un desdits secteurs, et chaque seconde extrémité (14", 24", 34", 44") est associée aux extrémités des autres éléments filiformes, et ensemble peut être associée à ladite ligne (2) ;
- ledit dispositif de distribution d'appâts (1) comprend en outre des moyens de limitation de mouvement pour lesdits secteurs (13, 23, 33, 43) lorsque ledit dispositif de distribution d'appâts (1) est dans la configuration ouverte, où lesdits moyens de limitation de mouvement comprennent :
- un noyau allongé (4) autour duquel sont disposés les éléments filiformes flexibles (14, 24, 34, 44) ;
- une cale tronconique (8) qui peut glisser le long dudit noyau (4) ; et
- un ressort hélicoïdal (9) actionné par compression et monté sur ledit noyau (4) ;
où ladite cale (8), dans la configuration ouverte du dispositif de distribution d'appâts (1), est libre de glisser le long dudit noyau (4) vers l'extérieur dudit récipient (3), sous l'effet de l'action de libération dudit ressort hélicoïdal (9), agissant comme un limiteur de mouvement pour lesdits secteurs (13, 23, 33, 43).

2. Dispositif de distribution d'appâts (1) selon la revendication 1, **caractérisé par le fait qu'**il comprend des secteurs en multiples de deux, en commençant par six.

3. Dispositif de distribution d'appâts (1) selon la revendication 1, **caractérisé par le fait que** la forme dudit récipient (3) reproduit un solide de rotation.

4. Dispositif de distribution d'appâts (1) selon la revendication 3, **caractérisé par le fait que** ledit récipient comprend une portion de tête substantiellement plate (3') et une portion de queue substantiellement pointue (3"), où les moyens de fixation dudit récipient (3) à ladite ligne (2) sont disposés au niveau de ladite portion de queue (3").

5. Dispositif de distribution d'appâts (1) selon la revendication 1, **caractérisé par le fait que** lesdits quatre éléments filiformes flexibles au minimum (14, 24, 34, 44) sont en matière plastique, de sorte que ledit dispositif de distribution d'appâts (1) reste dans la configuration ouverte lors de la récupération grâce à l'effet de mémoire découlant de la nature des éléments filiformes.

6. Dispositif de distribution d'appâts (1) selon la revendication 1, **caractérisé par le fait que** lesdits moyens de fixation dudit récipient (3) à ladite ligne (2) comprennent une virole annulaire (5) apte à retenir simultanément en elle les secondes extrémités (14", 24", 34", 44") desdits éléments filiformes flexibles (14, 24, 34, 44).

7. Dispositif de distribution d'appâts (1) selon la revendication 6, **caractérisé par le fait que** ladite virole annulaire (5) est intérieurement creuse et comporte une enveloppe (6) et un fond (7) associés de façon étanche l'un à l'autre, de façon à isoler un volume d'air à l'intérieur de ladite virole (5).

8. Dispositif de distribution d'appâts (1) selon la revendication 1, **caractérisé par le fait que** ledit champ magnétique est généré par une multitude d'aimants (10) disposés le long des bords desdits secteurs (13, 23, 33, 43) à proximité de leurs extrémités.
